# EUROPEAN PATENT SPECIFICATION

(11) **EP 2 913 141 B1**
(45) Date of publication and mention of the grant of the patent: **06.11.2019**
(21) Application number: 14157345.1
(22) Date of filing: 28.02.2014
(51) Int. Cl.: B23K 35/32, B23K 35/28, B23K 35/36, B23K 35/40, B23K 35/02, B22F 9/04, C22C 1/04, C22C 21/00, C22C 21/02, C22C 21/08, C22C 29/10, C22C 32/00, C22C 29/08

(54) **Metal-core welding wire and method for forming the same**
Schweißdraht mit Metallkern und Verfahren zur Herstellung davon
Fil de soudage à noyau métallique et son procédé de fabrication

(43) Date of publication of application: 02.09.2015
(73) Proprietor: Illinois Tool Works Inc., Glenview, IL 60025 (US)
(72) Inventor: Rosert, Reinhard, 01217 Dresden (DE); Raffeis, Iris, 67317 Altleiningen (DE)
(74) Representative: Trinks, Ole

(56) References cited:
- EP-A1- 0 227 634
- EP-A1- 1 148 147
- CH-A- 503 123
- GB-A- 2 316 094
- JP-A- H05 179 386
- US-A- 2 700 091
- US-A- 3 332 752
- US-A- 4 331 857
- US-A- 6 113 667
- US-A1- 2011 236 718
- US-A1- 2013 092 674

## Description

The present invention relates to a metal-core welding wire and more particular to an improved metal core aluminum welding wire.

It is well known in the state of the art to use aluminum welding wires as a solid wire which is generally produced by continuously casting round bars which are then heated to a temperature dependent on the aluminum alloy and rolled to a predetermined diameter. The rod produced in this way is then drawn through a number of dies to reduce the diameter to the required size of the aluminum welding wire.

One main problem in the use of aluminum welding wires is the porosity of the weld. It is important that the welds are free of porosity but porosity observed in aluminum welds is caused by a number of sources but one of the most prominent sources are pores caused by the release of hydrogen bubbles from the solidifying weld metal. These bubbles are caused by introducing hydrogen containing materials into the weld. During welding, hydrogen containing materials are decomposed and the hydrogen so produced dissolves in the molten metal. As hydrogen has a relatively low solubility in the solid metals, small pores in the weld are caused upon solidification.

The document CH 503 123 A describes a flame-spraying material consisting of metal powder enclosed in a metal casing. The casing consists of aluminum and is filled with nickel and aluminum powder particles.

US-Patent No. US 3,676,309 B discloses an aluminum based alloy welding wire, which is coated with an alumina-phosphate coating having a low rate of hydration such that essentially porosity free welds are obtained. The aluminum welding wire may be prepared by immersing the wire in a first aqueous alkaline solution containing an anode strip, subsequently immersing the wire in a second aqueous alkaline solution containing a cathode strip and passing an electric current through the electrolytes while the wire is immersed therein.

Thereafter, the wire may be rinsed with cold water, immersed in a passivating and neutralizing acid bath and then rinsed again. The second part of the process is an acid electrolytic treatment.

In US-Patent No. US 4,913,927 B, an aluminum welding wire is disclosed having an ultra clean aluminum surface, lubricated with a dual coating of an essentially anhydrous lower alkanol and a colloidal solid lubricant.

Japanese Patent Publication JP 6-304780-A discloses an aluminum welding wire that is tubular and filled with a flux. According to the publication, the flux contains 5-10% sodium, 40-45% potassium, 5% or less oxygen, 5% or less sulfur, 5-10% fluorines and 35-40% chlorines.

From US 6,933,468 B2 it is known to have a metal core welding wire made of a metal sheath and a core in which the core contains a core composition of various powdered materials. The sheath can be an aluminum sheath and the core composition can contain less than about 5% non-metallic components based on the weight of the wire. In manufacturing this metal core wire, the core composition is blended and deposited onto a metal strip that is formed into a tube or sheath about the core composition in a forming mill. The sheath surrounding the core composition is drawn through reducing dies to a specified diameter. In order to perform the drawing operation, it is necessary to lubricate the outside surface of the sheath as it is pulled through the reducing dies. To avoid hydrogen release in the weld, an inorganic lubricant in the reducing dies is used as it is hydrogen free. For example, molybdenum disulfide can be used.

From the German Patent Application DE 103 34 959 A1 a core-welding wire is known for welding parts from higher strength aluminum alloys with a tubular sheath in which one or more components in powdered form are filled in, wherein by external heating of the filled sheath, a predetermined alloy from an aluminum alloy, preferably an aluminum magnesium manganese alloy is achieved. The core should consist of water or gas atomized melts with a grain size < 0,2 mm.

From US-Patent No. US 6,479,165 B2 an arc spraying method is known which discloses a material wire for wear-resistant and tribologically favourable shaped bodies manufactured by the arc spraying method which comprises a covering and a filling. The covering comprises an alloy based on aluminum. The filling comprises further alloy components for the resulting alloy of the shaped body, for example silicon. Apart from silicon, the filling may also comprise further components, for example aluminum and/or boron. By way of this, the composition and the material properties of the resulting alloy of the shaped body may be set. The covering is prepared as closed seamless tube comprising an alloy based on aluminum with at least one further alloy component, probably magnesium, silicon and manganese. This tube can be drawn, welded or extruded. The covering is subsequently filled with a filling material, wherein the components are present as a coarse powder. The powder may consist of silicon, aluminum and boron and even if a coarse powder is used, a maximal grain size is about 600 pm. The filling shall be compacted by way of a directed shaking during filling, wherein the subsequent drawing procedure with which the material wire is reduced to the final diameter, the powder of the filling is reduced in size which leads to a compact filling and has a positive effect on a uniform distribution in the layer.

In the German Publication DE 198 41 619 A1, a material wire for producing wear-resistant coatings of hypoeutectic Al/Si by thermal spraying is disclosed, wherein the wire consists of a sheath from metallic aluminum and a filling from further alloy components. The alloy components may be silicon, nickel, iron, magnesium, copper, cobalt, chromium, manganese, etc.

From European Publication EP 1 148 229 B1, a method for manufacturing a cylinder liner for combustion engines by means of thermal spray deposition of a wearing layer is known, wherein the wearing layer comprises a hypoeutectic aluminum silicon alloy and said protective or connecting layer comprises an eutectic or hypoeutectic aluminum silicon alloy, wherein a filler wire having a closed envelope is used in the arc spray deposition process, wherein said filler wire is filled with a silicon alloy.

Aluminum and aluminum alloys are widely used due to the low density and the high corrosion resistance, for example, as construction material.

The possible strength of the material is between 50 megapascal and 700 megapascal. Aluminum materials in constructions are manufactured and joined by means of welding. Because of the specific characteristics of aluminum in welding (i.e. affinity to oxygen), welding methods are used which normally use inert protective gas such as argon or helium to avoid oxidation. These oxides, for example aluminum oxide (Al₂O₃), are characterized by a very high melting point and may result in unwanted inclusions. As already mentioned, aluminum alloys are moreover susceptible due to pore formation due to the release of hydrogen which solubility in liquid aluminum is much higher than in solid aluminum.

Aluminum alloys are classified into forgeable alloys and cast alloys, which are classified into hardenable and non-hardenable materials. The most common alloy materials for aluminum are magnesium within 0.3-7% for higher strength and a finer grain in the microstructure, manganese in 0.3-1,2% for a higher strength and a better corrosion resistance, copper up to 5% for higher strength. By alloying copper, the corrosion resistance decreases. Silicon up to 12% which lowers the melting point up to 577°C so that this alloy can possibly be soldered.

For welding aluminum alloys, several materials are existing, mostly fitted to the material to be welded. For the widely spread MIG-method, normally homogenous metal wires are used. These wires are usually machined in such a way that drawing agents are fully removed as they can cause pores. Additionally, the alumina coating is reduced.

There are only few alloys which can be drawn to wires as, for example, hypoeutectic alloys cannot be drawn into metal wires. One solution for that problem is to produce metal core welding wires, wherein the alloying metals which lead to lower mechanical properties of the wire are concentrated in the core.

Normally in these metal core welding wires, the core composition is blended and deposited onto a metal strip that is formed into a tube or sheath about the core composition in a forming mill.

The present invention is based on the object to provide a metal-core welding wire with which weld seams with low porosity and high strength are achievable and which is unsusceptible to humidity.

It is a further object of the invention to provide a method for producing a metal-core welding wire which is unsusceptible to humidity, leads to nonporous weld seams and provides weld seams with high strength.

It is still further an object to provide metal-core welding wires with compositions of the sheath and of the core filling material which lead to matched characteristics of the weld seam material.

The present invention relates to a metal-core welding wire as defined by independent claim 1, as well as to a method for the manufacture of a metal-core welding wire as defined by independent claim 5, wherein further developments of the metal-core welding wire and the method are provided in the sub-claims, respectively.

The inventors have found that a sheath with a beading or seam is almost disadvantageaus for weldings and in particular for high strength weld seams of aluminum.

The inventors ascertained that on the one hand, humidity can intrude into the core of the wire through the beading or seam. On the other hand, lubricants for drawing the wire through the dies infiltrates the beading or seam as well and remains in the beading or seam, even if the lubricant is removed from the wire. Both, humidity and remaining lubricants are responsible for hydrogen pores in the weld.

Further, the inventors found out that water or gas atomized powders for metal core welding wires have an oxygen content which is too high for the application in high strength welds, as a high oxygen content leads to an increased formation of alumina during welding.

In order to overcome these disadvantages found by the inventors, the metal core welding wire according to the invention consists of a seamless tube made by extrusion from aluminum, in particular a hardenable alloy, as for example from the alloy system Al-Mg-Si.

Further, according to the invention, powders for the core filling are used which are made from metal and/or metal alloys and/or metal oxides and/or metal alloy oxides. For example the powder may be made from hypereutectic alloys. According to the invention, these hypereutectic alloys are produced by homogenously melting the components with the respective analysis and afterwards grinding or milling the solidified melt, sieving and fractioning the powder. Hypereutectic powders made in this manner have an excellent grindability and only have low oxygen and hydrogen contents.

Based on the homogenous melting, decompositions of the components are avoided when the respective powder is filled into the tube, in particular by vibration filling.

The overall composition of the alloy in the weld seam or weld deposit is set by the core content relative to the set based on the core content relative to the dimensions (e.g., diameter, thickness) and composition of the tube.

It has been found that filling powders with a grain size < 0.4 mm are suitable for the invention.

The filling ratio of filling powder in weight percent of the metal core welding wire is 8.5 % to 82 %. Suitable wire diameters are in general 1.2 mm to 5 mm.

According to the invention, the filled tube is subsequently drawn to an intermediate diameter, wherein by drawing, the sheath hardens. By drawing, the powder is compressed in such a manner that air or oxygen from air which has been filled-in with the powder is fully removed.

According to the invention, further, the drawn tube is after"-wards soft annealed for the further processing of the tube into a wire. The powder is not affected by soft annealing as according to the invention it has a higher melting point than the soft annealing temperature.

The dimensions of the initial tube are for example 12 mm x 2 mm or other, wherein the outer diameter is 12 mm and the wall thickness is 2 mm.

After filling the tubes with the powder and after soft annealing, the intermediate metal-core welding wire is drawn to final diameters of 1,2 to 3,17 mm in a generally known way.

In one embodiment, the metal-core welding wire has a chemical composition of 4-8 mass-% Si and 8-16 mass-% manganese, the rest being aluminum. By welding with this metal-core welding wire, a strength of 310 N/mm² could be achieved. The strength can be increased by adding up to 4% copper to the melt (of the filling). The addition of up to 4% titanium and/or zirconium into the melt is possible without the risk of hydride-formation.

In a further embodiment, the metal-core welding wire has the chemical composition of 45-55 mass-% Ni, the rest being aluminum. This wire is well suited for arc spraying coating and built-up welding or overlay welding.

According to one further embodiment of the invention, the metal-core welding wire has the composition of 19-30 mass-% Si, the rest being aluminum. This hypereutectic alloy may be used for laser-welding. The high burn-off of silicon is compensated by the high content of silicon. In this way 5-12 mass-% silicon are achieved which ensures crack-free weld baths.

Materials for the tube, respectively the sheath, are AlMgSi 0,5, AlMgSi 0,7, AlMn1, Al99.9.

Possible tube and filler material components include:
1. Al-tube + Ni-powder, when the chemical composition of the overall wire is 50% aluminum + 50% nickel.
2. AlMgSi0,5-tube with up to 16% manganese and 8% Si.
3. AlMgSi0,5-tube with a chemical composition of the wire of 20% manganese, 10% Si.
4. AlMgSi0,5-tube with a chemical composition of the wire of 6-14% Mg, the rest being aluminum.
5. AlMgSi0,5-tube with a chemical composition of the whole wire of 22% Si, the rest being aluminum.
6. AlMn1-tube with 40 % pure titanium powder for high temperature applications and high density layers.

The aforementioned possible tube and filler material components lead to the following chemistries, respectively properties of the weld deposit resulting from welding or spraying with the aforementioned metal core welding wires. The numeration of the examples is taken over.

| Example | sheath | Al | Mn | Si | Mg | Ni | Ti | W- | Al- | Chromium- | Titanium- | possible applications |
|---|---|---|---|---|---|---|---|---|---|---|---|---|
| | | | | | | | | carbide | oxide | oxide | oxide | |
| 1 | AlMgsi0,5 | Rest | 0,08 | 0,38 | 0,23 | | | | 25,00 | | | labelling of steel slabs |
| | | | | | | | | | | | | |
| 2 | AlMgSi0,5 | Rest | 0,08 | 0,38 | 0,23 | | | | | | 23,80 | high density layers |
| | | | | | | | | | | | | |
| 3 | AlMgSi0,5 | Rest | 0,05 | 0,25 | 0,25 | 50,00 | | | | | | buffering layers |
| | | | | | | | | | | | | |
| 4 | AlMgSi0,5 | Rest | 11,07 | 5,90 | 0,41 | | | | | | | high strength welding |
| | | | | | | | | | | | | ∼ 300 N/mm² |
| 5 | AlMgSi0,5 | Rest | 20,07 | 10,33 | 0,33 | | | | | | | high strength welding |
| | | | | | | | | | | | | ∼ 300 N/mm² |
| 6 | AlMgSi0,5 | Rest | 0,09 | 0,43 | 14,32 | | | | | | | welding |
| | | | | | | | | | | | | |
| 7 | AlMgSi0,5 | Rest | 0,08 | 25,38 | 0,38 | | | | | | | spraying and laser welding |
| | | | | | | | | | | | | |
| 8 | AlMgSi0,5 | Rest | 0,08 | 0,39 | 0,39 | | | | | 22,22 | | corrosion protection layers |
| | | | | | | | | | | | | |
| 9 | AlMn1 | Rest | 0,23 | 0,12 | 0,07 | | | 76,92 | | | | high densitiy layers and |
| | | | | | | | | | | | | high temperature applications |
| 10 | AlMn1 | Rest | 0,60 | 0,30 | 0,18 | | 40,00 | | | | | high densitiy layers |

The invention pertains to a metal-core welding wire, comprising a seamless sheath from aluminum or an aluminum alloy, a core containing a compressed powder, wherein the powder contains a metal powder and/or metal alloy powder, the powder being milled or ground from a solid metal or solid metal alloy with a predetermined composition, wherein the powder is made from a hypereutectic alloy.

According to a preferred embodiment of the invention the sheath consists of a hardenable forgeable aluminum alloy.

Another aspect of the invention is that the composition of the material of the sheath and the composition of the material of the core match in such a way that a favored composition of the welding seam or welding deposit is achieved by co-melting of the sheath and the core while welding, wherein the resulting predetermined alloy is set by the core content relative to the sheath diameter and the sheath thickness.

In another preferred embodiment of the invention the welding wire has a diameter of 1 mm to 5 mm.

According to another preferred embodiment of the invention the metal-core welding wire has a chemical composition of 4 mass-% to 8 mass-% Si and 8 mass-% to 16 mass-% manganese, the rest being aluminum or 45 mass-% to 55 mass-% Ni, the rest being aluminum or 19 mass-% to 30 mass-% Si, the rest being aluminum.

Further, it is preferred that the sheath is an Al-tube with Ni-powder, wherein the chemical composition of the overall wire is 50 % Al and 50 % Ni or the sheath is made of AlMgSi0,5 with up to 16 % manganese and up to 8 % Si.

According to a preferred embodiment of the invention the grain size of the filling powder is < 0.4 mm.

Furthermore, it is preferred that the filling ratio of the filling powder in the metal core welding wire in weight-% is 8.5 % to 82 %.

In a preferred embodiment of the invention the metal-core welding wire consists of an AlMn1-tube with a filling of a tungsten carbide powder consisting of WC and/or W₂C.

According to another preferred embodiment of the invention the metal-core welding wire consists of 75 weight-% to 85 weight-% tungsten carbide powder.

Further, it is preferred that the metal-core welding wire according to the invention consists of a AlMn1-tube and a filling of titanium powder.

In a further preferred embodiement the metal-core welding wire contains 35 weight-% to 50 weight-% titanium powder.

The invention pertains further to a weld seam or weld deposit made by welding a metal-core welding wire according to the invention, whereas it contains 0.05 weight-% to 21 weight-% Mn, 0.1 weight-% to 11 weight-% Si, 0.05 weight-% to 15 weight-% Mg, up to 50 weight-% Ni, up to 40 weight-% Ti, up to 78 weight-% W-carbide.

According to a preferred embodiment the weld seam or weld deposit Mn, 0.3 weight-% to 0.45 weight-% Si, 0.2 weight-% to 0.27 weight-% Mg and 22 weight-% to 27 weight-% Al-oxide, the rest or 0.03 weight-% to 0.8 weight-% Mn, 0.22 weight-% to 0.28 weight-% Si, 0.22 weight-% to 0.8 weight-% Mg, 45 weight-% to 55 weight-% Ni, the rest being Aluminum and impurities, or 10 weight-% to 12 weight-% Mn, 5 weight-% to 7 weight-% Si, 0.38 weight-% to 0.45 weight-% Mg, the rest being Aluminum and impurities, or 19 weight-% to 22 weight-% Mn, 9.5 weight-% to 11.5 weight-% Si, 0.3 weight-% to 0.37 weight-% Mg, the rest being Aluminum and impurities, or 0.05 weight-% to 0.13 weight-% Mn, 0.4 weight-% to 0.47 weight-% Si, 13.5 weight-% to 15.5 weight-% Mg or 0.04 weight-% to 0.12 weight-% Mn, 24 weight-% to 27 weight-% Si, 0.33 weight-% to 0.43 weight-% Mg, the rest being Aluminum and impurities, or 0.2 weight-% to 0.26 weight-% Mn, 0.09 weight-% to 0.15 weight-% Si, 0.05 weight-% to 0.09 weight-% Mg, 74 weight-% to 80 weight-% W-carbide, the rest being Aluminum and impurities, or 0.55 weight-% to 0.65 weight-% Mn, 0.25 weight-% to 0.35 weight-% Si, 0.15 weight-% to 0.21 weight-% Mg, 35 weight-% to 45 weight-% Ti, the rest being Aluminum and impurities.

The invention pertains further to a method for the manufacture of a metal-core welding wire, wherein a seamless tube from aluminum or an aluminum alloy is formed, the tube of aluminum or an aluminum alloy is filled with a powder containing a metal or a metal alloy, wherein the powder from the metal or the metal alloy is made from a homogenuously molten metal or metal alloy which is ground or milled after solidification to a predetermined grain size, and the powder-filled tube is drawn to a predetermined diameter, wherein by drawing, the powder is compressed in such a manner that gas i.e. air or oxygen from air which has been filled-in with the powder is fully removed.

It is preferred that by drawing the powder-filled tube, the sheath hardens and afterwards, the wire is soft annealed.

According to another preferred embodiment of the invention the drawn wire is calibrated by means of dies to a predetermined diameter.

In a further preferred embodiment of the invention drawing lubricants and/or oxide layers are removed.

Another aspect of the invention is that the powder filled in the core and the sheath or tube material have a higher melting point than the soft annealing temperature, wherein the powder has a higher melting point than the sheath or tube material.

In a preferred embodiment of the invention the tube from aluminum or an aluminum alloy is drawn from an initial tube diameter to a filling diameter, afterwards filled with powder by powder vibration, afterwards drawn to an intermediate diameter, heat-treated (soft annealed), drawn down to the final size and afterwards, final cleaning and scraping (peeling, skinning) of the wire is carried out.

Further, it is preferred that the initial tube diameter is 10 mm to 14 mm with a thickness of 1 mm to 4 mm; the intermediate diameter is 3,5 mm to 5,5 mm and the final diameter is 1,2 mm to 3,7 mm.

The invention pertains further to an application of a metal-core welding wire according to the invention in particular manufactured according to the inventive method for arc welding and in particular arc welding of aluminum and aluminum alloys, particularly for the arc welding of high strength weld seams, labeling of steel slabs, high density layers, buffering layers, arc spraying and laser welding.

powder has a higher melting point than the sheath or tube material.

In a preferred embodiment of the invention the tube from aluminum or an aluminum alloy is drawn from an initial tube diameter to a filling diameter, afterwards filled with powder by powder vibration, afterwards drawn to an intermediate diameter, heat-treated (soft annealed), drawn down to the final size and afterwards, final cleaning and scraping (peeling, skinning) of the wire is carried out.

Further, it is preferred that the initial tube diameter is 10 mm to 14 mm with a thickness of 1 mm to 4 mm; the intermediate diameter is 3,5 mm to 5,5 mm and the final diameter is 1,2 mm to 3,7 mm.

The invention pertains further to an application of a metal-core welding wire according to the invention in particular manufactured according to the inventive method for arc welding and in particular arc welding of aluminum and aluminum alloys, particularly for the arc welding of high strength weld seams, labeling of steel slabs, high density layers, buffering layers, arc spraying and laser welding.

## Claims

1. Metal-core welding wire, comprising:
- a seamless sheath, and
- a core containing a compressed powder,
**characterized in that**
the sheath comprises AIMgSi 0,5, AIMgSi 0,7, AlMn1, or Al99.9; the powder is made from hypereutectic alloys, and
that the metal core welding wire has a chemical composition of 4 mass-% to 8 mass-% Si and 8 mass-% to 16 mass-% Mn the rest being aluminum or 45 mass-% to 55 mass-% Ni, the rest being aluminum or 19 mass-% to 30 mass-% Si the rest being aluminum.

2. The metal-core welding wire according to claim 1,
**characterized in that**
the welding wire has a diameter of 1 mm to 5 mm.

3. The metal-core welding wire according to claim 1,
**characterized in that**
the grain size of the filling powder is < 0.4 mm.

4. The metal-core welding wire according to claim 1,
**characterized in that**
the filling ratio of the filling powder in the metal core welding wire in weight-% is 8.5 % to 82 %.

5. Method for the manufacture of a metal-core welding wire, in particular a metal-core welding wire according to one of claims 1 to 4, wherein
- a seamless tube is formed,
- the tube is filled with a powder,
- the powder-filled tube is drawn to a predetermined diameter,
**characterized in that**
by drawing, the powder is compressed in such a manner that gas which has been filled-in with the powder is fully removed, - wherein the tube comprises AIMgSi 0,5, AIMgSi 0,7, or AIMn 1; and
the powder is made from hypereutectic alloys which are ground or milled after solidification to a predetermined grain size,wherein the metal core welding wire has a chemical composition of 4 mass-% to 8 mass-% Si and 8 mass-% to 16 mass-% Mn the rest being aluminum or 45 mass-% to 55 mass-% Ni, the rest being aluminum or 19 mass-% to 30 mass-% Si the rest being aluminum.

6. The method according to claim 5,
**characterized in that**
by drawing the powder-filled tube, the sheath hardens and afterwards, the wire is soft annealed.

7. The method according to claim 5 or claim 6,
**characterized in that**
the drawn wire is calibrated by means of dies to a predetermined diameter.

8. The method according to one of the claims 5 to 7,
**characterized in that**
drawing lubricants and/or oxide layers are removed from the surface of the tube.

9. The method according to one of the claims 5 to 8,
**characterized in that**
the drawn tube is soft annealed for the further processing of the tube into a wire.

10. The method according to one of the claims 5 to 9,
**characterized in that**
the powder has a higher melting point than the soft annealing temperature.

11. The method according to one of the claims 5 to 10,
**characterized in that**
the tube from aluminum or an aluminum alloy is drawn from an initial tube diameter to a filling diameter, after-wards filled with powder by vibration, afterwards drawn to an intermediate diameter, heat-treated (soft annealed), drawn down to the final size and afterwards, final cleaning and scraping (peeling, skinning) of the wire is carried out.

12. The method according to claim 11,
**characterized in that**
the initial tube diameter is 10 mm to 14 mm with a thickness of 1 mm to 4 mm; the intermediate diameter is 3,5 mm to 5,5 mm and the final diameter is 1,2 mm to 3,7 mm.

13. The method according to one of the claims 5 to 12,
**characterized in that**
the composition of the material of the sheath and the composition of the material of the core match in such a way that a favored composition of the weld deposit is achieved by co-melting of the sheath and the core while welding, wherein the resulting predetermined alloy is set based on the core content relative to the dimensions (e.g., diameter, thickness) and composition of the tube.

14. Application of a metal-core welding wire according to one of the claims 1 to 4, in particular manufactured according to the method according to one of the claims 5 to 13, for arc welding and in particular arc welding of aluminum and aluminum alloys, particularly for the arc welding of high strength weld seams, labeling of steel slabs.

## Patentansprüche

1. Metallkernschweißdraht, umfassend:
eine nahtlose Hülle und einen Kern, der ein komprimiertes Pulver enthält, **dadurch gekennzeichnet, dass**
die Hülle AlMgSi 0,5, AlMgSi 0,7, AlMn1 oder Al99,9 umfasst;
das Pulver aus übereutektischen Legierungen hergestellt ist und dadurch, dass der Metallkern-Schweißdraht eine chemische Zusammensetzung von 4 Masse-% bis 8 Masse-% Si und 8 Masse-% bis 16 Masse-% Mn aufweist, der Rest Aluminium oder 45 Masse-% bis 55 Masse-% Ni ist, der Rest Aluminium oder 19 Masse-% bis 30 Masse-% Si ist, wobei der Rest Aluminium ist.

2. Metallkern-Schweißdraht nach Anspruch 1, **dadurch gekennzeichnet, dass**
der Schweißdraht einen Durchmesser von 1 mm bis 5 mm hat.

3. Metallkern-Schweißdraht nach Anspruch 1, **dadurch gekennzeichnet, dass**
die Korngröße des Füllpulvers < 0,4 mm ist.

4. Metallkern-Schweißdraht nach Anspruch 1, **dadurch gekennzeichnet, dass**
der Füllgrad des Füllpulvers im Metallkern-Schweißdraht in Gew.-% 8,5 bis 82 beträgt.

5. Verfahren zur Herstellung eines Metallkern-Schweißdrahtes, insbesondere eines Metallkern-Schweißdrahtes nach einem der Ansprüche 1 bis 4, wobei
ein nahtloses Rohr gebildet wird, wobei das Rohr mit einem Pulver gefüllt ist,
das pulvergefüllte Rohr auf einen vorbestimmten Durchmesser gezogen wird, **dadurch gekennzeichnet, dass**
durch Ziehen das Pulver derart komprimiert wird, dass mit dem Pulver gefülltes Gas vollständig entfernt wird, wobei das Rohr AlMgSi 0,5, AlMgSi 0,7 oder AlMn 1 umfasst; und
das Pulver aus übereutektischen Legierungen hergestellt ist, die nach dem Erstarren auf eine vorbestimmte Korngröße geschliffen oder gemahlen werden,
wobei der Metallkern-Schweißdraht eine chemische Zusammensetzung von 4 Masse-% bis 8 Masse-% Si und 8 Masse-% bis 16 Masse-% Mn aufweist, wobei der Rest Aluminium oder 45 Masse-% bis 55 Masse-% Ni ist, der Rest Aluminium oder 19 Masse-% bis 30 Masse-% Si ist, wobei der Rest Aluminium ist.

6. Verfahren nach Anspruch 5, **dadurch gekennzeichnet, dass**
durch Ziehen des mit Pulver gefüllten Rohrs die Hülle aushärtet und anschließend der Draht weichgeglüht wird.

7. Verfahren nach Anspruch 5 oder Anspruch 6, **dadurch gekennzeichnet, dass**
der gezogene Draht mittels Düsen auf einen vorbestimmten Durchmesser kalibriert wird.

8. Verfahren nach einem der Ansprüche 5 bis 7, **dadurch gekennzeichnet, dass**
Ziehschmierstoffe und/oder Oxidschichten von der Oberfläche des Rohres entfernt werden.

9. Verfahren nach einem der Ansprüche 5 bis 8, **dadurch gekennzeichnet, dass**
das gezogene Rohr zur Weiterverarbeitung des Rohrs zu einem Draht weichgeglüht wird.

10. Verfahren nach einem der Ansprüche 5 bis 9, **dadurch gekennzeichnet, dass**
das Pulver einen höheren Schmelzpunkt als die Weichglühtemperatur aufweist.

11. Verfahren nach einem der Ansprüche 5 bis 10, **dadurch gekennzeichnet, dass**
das Rohr aus Aluminium oder einer Aluminiumlegierung von einem anfänglichen Rohrdurchmesser zu einem Fülldurchmesser gezogen wird, danach mit Pulver durch Schwingung gefüllt wird, danach zu einem Zwischendurchmesser gezogen wird, wärmebehandelt (weichgeglüht) wird, nach unten zur Endgröße gezogen wird und danach abschließend ein Reinigen und Abschaben (Abziehen, Extrusion) des Drahtes ausgeführt wird.

12. Verfahren nach Anspruch 11, **dadurch gekennzeichnet, dass**
der anfängliche Rohrdurchmesser 10 mm bis 14 mm bei einer Dicke von 1 mm bis 4 mm beträgt; der Zwischendurchmesser 3,5 mm bis 5,5 mm beträgt und der Enddurchmesser 1,2 mm bis 3,7 mm beträgt.

13. Verfahren nach einem der Ansprüche 5 bis 12, **dadurch gekennzeichnet, dass**
die Zusammensetzung des Materials der Hülle und die Zusammensetzung des Materials des Kerns derart übereinstimmen, dass eine bevorzugte Zusammensetzung des Schweißgutes durch Co-Schmelzen der Hülle und des Kerns während des Schweißens erreicht wird, wobei die resultierende vorbestimmte Legierung basierend auf dem Kerninhalt in Bezug auf die Abmessungen (z. B. Durchmesser, Dicke) und der Zusammensetzung des Rohrs eingestellt wird.

14. Anwendung eines Metallkern-Schweißdrahtes nach einem der Ansprüche 1 bis 4, insbesondere hergestellt gemäß dem Verfahren nach einem der Ansprüche 5 bis 13 zum Lichtbogenschweißen und insbesondere zum Lichtbogenschweißen von Aluminium und Aluminiumlegierungen, insbesondere zum Lichtbogenschweißen von hochfesten Schweißnähten, zum Kennzeichnen von Stahlbrammen.

## Revendications

1. Fil à souder à âme métallique, comprenant :
- une gaine sans jointure, et
- une âme contenant une poudre comprimée,
**caractérisé en ce que** la gaine comprend AlMgSi 0,5, AlMgSi 0,7, AlMn1 ou Al99,9 ;
la poudre est fabriquée à partir d'alliages hypereutectiques, et
**en ce que** le fil à souder à âme métallique présente une composition chimique de 4 % en masse à 8 % en masse de Si et de 8 % en masse à 16 % en masse de Mn, le reste étant de l'aluminium ou de 45 % en masse à 55 % en masse de Ni, le reste étant de l'aluminium, ou encore de 19 % en masse à 30 % en masse de Si, le reste étant de l'aluminium.

2. Fil à souder à âme métallique selon la revendication 1, **caractérisé en ce que**
le fil à souder présente un diamètre de 1 mm à 5 mm.

3. Fil à souder à âme métallique selon la revendication 1, **caractérisé en ce que**
la granulométrie de la poudre de remplissage est < 0,4 mm.

4. Fil à souder à âme métallique selon la revendication 1, **caractérisé en ce que**
le rapport de remplissage de la poudre de remplissage dans le fil à souder à âme métallique en % massiques est de 8,5 % à 82 %.

5. Procédé de fabrication d'un fil à souder à âme métallique, en particulier d'un fil à souder à âme métallique selon l'une des revendications 1 à 4, dans lequel
- un tube sans jointure est formé,
- le tube est rempli d'une poudre,
- le tube rempli de la poudre est étiré jusqu'à un diamètre prédéterminé, **caractérisé en ce que**
par étirage, la poudre est comprimée d'une façon telle que le gaz qui a été introduit avec la poudre est entièrement éliminé, -
le tube comprenant AlMgSi 0,5, AlMgSi 0,7 ou AlMn 1 ; et
la poudre est fabriquée d'alliages hypereutectiques qui sont broyés ou meulés après solidification jusqu'à une granulométrie prédéterminée, le fil à souder à âme métallique présentant une composition chimique de 4 % en masse à 8 % en masse de Si et de 8 % en masse à 16 % en masse de Mn, le reste étant de l'aluminium, ou de 45 % en masse à 55 % en masse de Ni, le reste étant de l'aluminium, ou encore de 19 % en masse à 30 % en masse de Si, le reste étant de l'aluminium.

6. Procédé selon la revendication 5, **caractérisé en ce que**
par étirage du tube rempli de poudre, la gaine durcit, et le fil est ensuite soumis à un recuit d'adoucissement.

7. Procédé selon la revendication 5 ou la revendication 6, **caractérisé en ce que**
le fil étiré est étalonné par le biais de matrices jusqu'à un diamètre prédéterminé.

8. Procédé selon l'une des revendications 5 à 7, **caractérisé en ce que**
les lubrifiants d'étirage et/ou les couches d'oxyde sont éliminés de la surface du tube.

9. Procédé selon l'une des revendications 5 à 8, **caractérisé en ce que**
le tube étiré est soumis à un recuit d'adoucissement pour la transformation ultérieure du tube en un fil.

10. Procédé selon l'une des revendications 5 à 9, **caractérisé en ce que**
la poudre présente un point de fusion supérieur à la température de recuit d'adoucissement.

11. Procédé selon l'une des revendications 5 à 10, **caractérisé en ce que**
le tube en aluminium ou alliage d'aluminium est étiré à partir d'un diamètre de tube initial jusqu'à un diamètre de remplissage, avant d'être rempli de poudre par vibrations, étiré jusqu'à un diamètre intermédiaire, traité thermiquement (recuit d'adoucissement) et étiré jusqu'à la taille définitive, puis le nettoyage et le raclage finaux (décollement, pelage) du fil sont mis en œuvre.

12. Procédé selon la revendication 11, **caractérisé en ce que**
le diamètre initial du tube est de 10 mm à 14 mm avec une épaisseur de 1 mm à 4 mm ; le diamètre intermédiaire est de 3,5 mm à 5,5 mm et le diamètre final est de 1,2 mm à 3,7 mm.

13. Procédé selon l'une des revendications 5 à 12, **caractérisé en ce que**
la composition du matériau de la gaine et la composition du matériau de l'âme correspondent de telle sorte qu'une composition favorisée du dépôt de soudage est obtenue par co-fusion de la gaine et de l'âme lors du soudage, l'alliage prédéterminé résultant étant obtenu en se basant sur la composition de l'âme par rapport aux dimensions (par exemple diamètre, épaisseur) et sur la composition du tube.

14. Application d'un fil à souder à âme métallique selon l'une des revendications 1 à 4, en particulier fabriqué selon le procédé selon l'une des revendications 5 à 13, pour le soudage à l'arc et en particulier le soudage à l'arc de l'aluminium et des alliages d'aluminium, en particulier pour le soudage à l'arc de soudures de résistance élevée, le marquage de brames d'acier.
